# EUROPEAN PATENT SPECIFICATION

(11) **EP 3 110 722 B1**
(45) Date of publication and mention of the grant of the patent: **04.04.2018**
(21) Application number: 15715416.2
(22) Date of filing: 26.02.2015
(51) Int. Cl.: B65D 85/804

(54) **CAPSULE FOR BEVERAGES**
KAPSEL FÜR GETRÄNKE
CAPSULE POUR BOISSONS

(30) Priority: 28.02.2014 IT MO20140046; 28.02.2014 IT MO20140047
(43) Date of publication of application: 04.01.2017
(73) Proprietor: Sarong Societa' Per Azioni, 42046 Reggiolo (RE) (IT)
(72) Inventor: BARTOLI, Andrea, I-42123 Reggio Emilia (IT); CAPITINI, Davide, I-42123 Reggio Emilia (IT)
(74) Representative: Crugnola, Pietro
(86) International application number: PCT/IB2015/051430
(87) International publication number: WO 2015/128827

(56) References cited:
- EP-A1- 0 521 510
- WO-A1-2011/069829
- WO-A1-2013/136209
- WO-A1-2015/011683
- WO-A2-2010/116284
- FR-A3- 2 972 180

## Description

The invention relates to capsules or containers for preparing products, for example beverages, in automatic dispensing machines. In particular, the invention relates to a sealed, single-dose and disposable capsule containing an initial product that is able to make an end product by interacting with pressurised fluid.

Capsules known for use in dispensing machines are disposable and single-dose containers comprising an external casing, made of plastic material impermeable to liquids and gases and having a beaker or cup shape. The casing has a bottom wall and a side wall defining an upper opening through which the product from which to obtain the beverage can be inserted. The upper opening is closed hermetically by a cover element, typically an aluminium film or a plastic film so as to seal the product inside the container. The cover element is generally fixed to a peripheral and annular flange-shaped edge of the casing, that is opposite the bottom wall and arranged around the upper opening.

The capsule is perforable to enable pressurised liquid to be delivered, typically water, and to enable the beverage obtained to exit. In particular, the cover and the bottom wall of the casing are perforable by suitable means of a dispensing machine to enable respectively the pressurised liquid to be delivered from above and the beverage to be extracted from below.

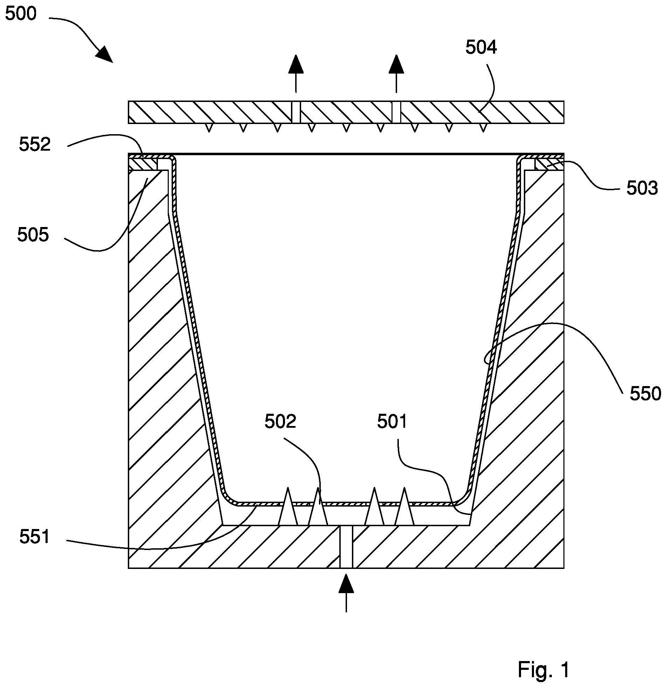

As illustrated schematically in figure 1, a dispensing machine 500 of known type comprises a housing 501 arranged for receiving and enclosing a capsule 550. A bottom portion of the housing 501 is provided with perforating means 502 for perforating a bottom wall 551 of the capsule 550 and injecting the pressurised fluid or extracting the beverage therefrom. To prevent, in use, the fluid or beverage exiting the housing 501 because of the high operating pressure, sealing means 503 have to be interposed between the capsule 550 and the housing 501.

The sealing means 503 generally comprises an annular washer, made of elastomeric material, interposed between a flange edge 552 of the capsule 550 and an abutting portion 505 of the housing 501. When the capsule 550 is closed in the housing 501, the sealing means 503 is compressed by a perforating element 504, thus ensuring the hydraulic seal.

A drawback of this solution consists of the fact that the washer, in addition to being subject to wear and deterioration with use, comes into contact with the product and/or the fluid at each dispensing without being able to be properly washed subsequently. From a hygiene point of view this solution is not therefore optimum.

To overcome this drawback, capsules are known that integrate a sealing element in yieldable, typically elastomeric, material that is crushed when the capsule is inserted into the dispensing machine and ensures the seal thereof. Such capsules can also be used in dispensing machines devoid of sealing means.

Patent EP 1654966 illustrates a capsule for beverages comprising an elastic sealing element fixed to a circumferal edge of the capsule made of elastomeric material, in particular silicone rubber, which is different from the material used for forming the capsule. The elastic element can be fixed to the casing of the capsule at a peripheral edge or at a bottom wall of said casing.

A capsule of this type is nevertheless very costly because it requires the sealing element in silicone rubber to be made and connected to the casing of the capsule, the capsule being nevertheless difficult to fix by thermowelding.

Capsules are also known from example from patent EP2303077 or from application EP2389326 which comprise a sealing element made of the same material as the casing of the capsule. The sealing element is in this case made of a plurality of concentric circumferal ridges present in the edge of the capsule, which nevertheless require very precise manufacturing by injection moulding to ensure an optimum seal when the capsule is inserted into the dispensing machine.

If this precision is not achieved, undesired leaks may occur when pressurised fluid is injected into the capsule and/or fill the housing into which the capsule is inserted.

WO2010116284 discloses a capsule for preparing a drink, such as coffee, comprising an hollow element designed to contain a product, e.g. ground coffee, from which a drink is obtainable, said hollow element comprising a side wall an upper face and a lower face comprising a brewing membrane and a rim in the shape of a ring, said rim has a recess in the form of an annular groove communicating with the interior of the capsule. FR2972180 discloses a kit or ensemble for the formation of refillable capsules for preparing infusions such as espresso coffee, comprising closing cover in the form of perforated blade, and capsule body having truncated arrangement with lower and upper bases. The lower base is provided with perforations and the upper base is provided with an annular edge in the form of flap, the cover having an auto-adhesive layer at its lower part. The capsule body has an annular protuberance moulded on a lower surface of its annular edge, where the protuberance extends from a proximity of the annular edge to an insertion zone that is provided in an external lateral surface of the capsule body. WO2011069829 which is considered the prior art closest to the subject matter of the present invention, discloses a capsule for beverages comprising a casing having a base wall and a side wall defining a cavity suitable for containing a product for preparing a beverage. The capsule further comprises an edge extending from said side wall and a cover element fixed to said edge to close said cavity hermetically. Said edge comprises a sealing element comprising at least one protrusion facing opposite said base wall and defining one further cavity open in a direction facing said base wall.

An object of the present invention is to improve known capsules for beverages, in particular capsules that are usable in known dispensing machines provided with a housing suitable for containing and enclosing in a sealed manner a capsule.

Another object is to make a capsule that is usable in known dispensing machines that guarantees the seal during dispensing without the need for specific sealing means of the housing.

A further aim is to obtain a capsule that is cheap and simple to make.

According to the invention a capsule is provided for beverages according to claim 1 and one or more claims appended thereto.

The invention can be better understood and implemented with reference to the attached drawings that illustrate certain embodiments by way of non-limiting example, in which:
Figure 1 is a schematic cross section of a known capsule for beverages associated with a dispensing machine which is also of known type;
Figure 2 is a schematic cross section of a capsule according to the invention associated with a dispensing machine, which is illustrated schematically;
Figure 3 is a partial front view, with certain illustrated parts sectioned for clarity, of a capsule according to the invention;
Figure 4 is an enlarged schematic partial cross section of an edge of the capsule of Figure 3;
Figure 5 is an enlarged schematic partial cross section of an edge of an alternative embodiment of the capsule of Figure 3 but which does not fall under the scope of the appended claims;
Figure 6, 7 and 8 are schematic cross sections like that of Figure 5, of further embodiments of the capsule of Figure 3, where the embodiments of figures 6 and 8 do not fall under the scope of the claims.

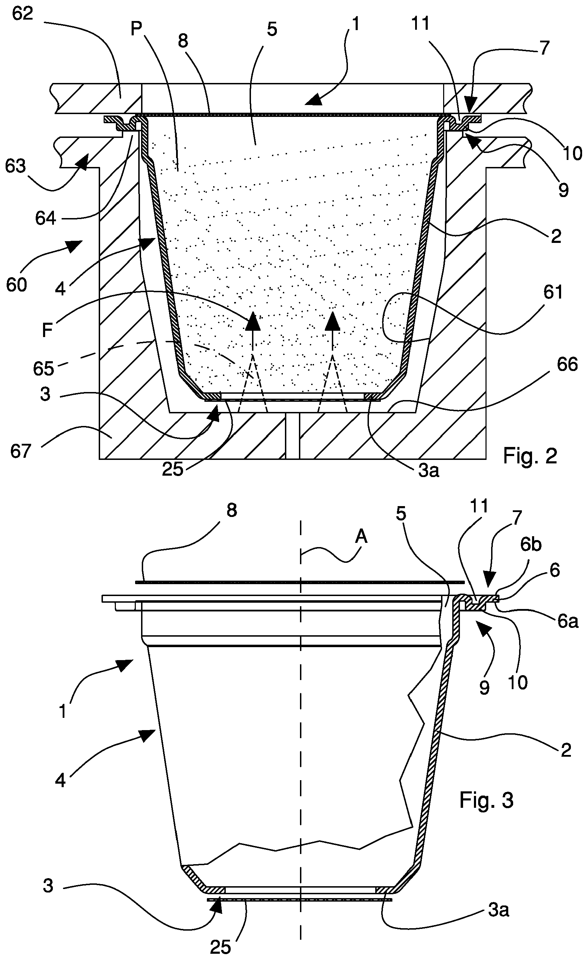

With reference to Figure 2, there is illustrated a capsule 1 for beverages according to the invention, which is usable in a dispensing machine 60, disclosed below, for producing an end product, in particular a hot beverage, for example coffee, barley, herbal tea, tea, chocolate, etc by injecting a hot pressurised fluid F thereinto.

The capsule 1 of the invention comprises an external casing or container 2, in turn comprising a base wall 3 and a side wall 4 defining a cavity 5 that is open and suitable for containing an initial product P, for example a soluble or percolable food product to be combined with a fluid, typically water, to obtain an end product. The base wall 3 and the side wall 4 define a body of the capsule 1 that has substantially a beaker or cup shape.

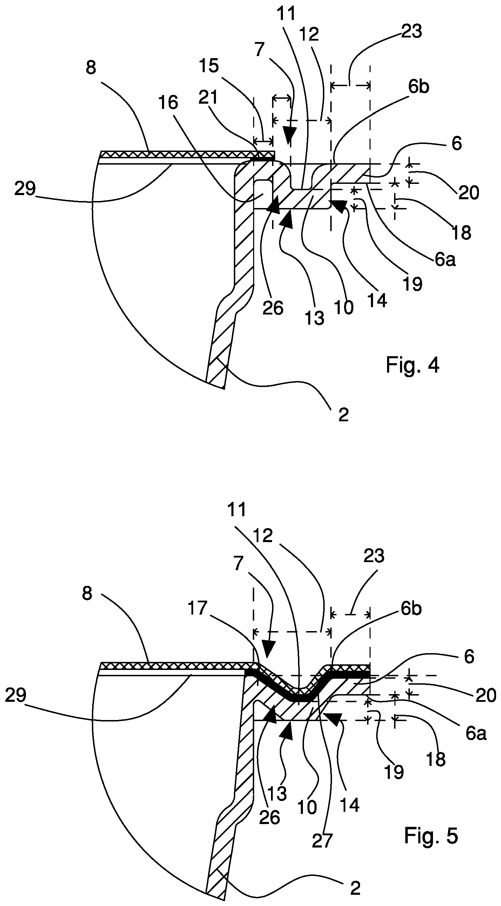

The casing further comprises a flange-shaped edge 7 connected to the side wall 4 and extending therefrom, arranged around an opening 29 of the cavity 5 (Figure 4). The edge 7 is moreover opposite the base wall 3 and faces outwards with respect to the cavity 5.

The casing 2 is made by forming a sheet of thermoformable plastic material that is suitable for the process of preparing the end product from the initial product P, which is, for example, able to withstand without deformation temperatures up to 100°C and pressure up to 5 bar.

This sheet of plastic material can have a thickness comprised between 15 micron and 1400 micron, in particular between 350 micron and 1200 micron and is made of a polyolefin, for example polypropylene PP and/or polyethylene PE and/or polyamide PA.

In detail, the sheet material can comprise a first layer of material, in particular suitable for contacting and/or preserving the initial product P, for example made of polypropylene PP that is impermeable to humidity, a second layer of material that is not in contact with the initial product P made of material that is impermeable to gases, in particular to oxygen and optionally also to humidity, which is also known as a barrier layer, and a third layer of outer material.

The barrier layer, interposed between the first and the second layer, ensures complete insulation of the outer environment of the cavity 5, in particular if the first layer is permeable over time to oxygen. The barrier layer has a thickness comprised between 2 micron and 100 micron, in particular between 15 micron and 70 micron, and is made for example of ethylene vinyl alcohol (EVOH), which is gas-impermeable only to oxygen or polyvinylidene chloride (PVDC), which is gas-impermeable to both oxygen and to humidity.

According to a first embodiment (which is not shown) of the sheet material, the first and the third layer are made of the same material, for example polypropylene PP and are coupled with the barrier layer interposed therebetween. Such layers may have the same thickness (for example 350 micron), or different layers (for example the first layer may have a thickness of 500 micron whereas the third layer may have a thickness of 300 micron).

According to a second alternative embodiment (which is not shown), the first layer is a support layer and is made of polypropylene PP, the second layer is the barrier layer (EVOH or PVDC) and third layer is an extruded layer of polypropylene PP or polyethylene PE, that is 15 micron thick, that is coupled with the first and the second layer during the process of producing the sheet material.

The sheet material, both according to the first and to the second embodiment, is thus selected so as to protect over time the initial product P contained in the capsule from humidity and from oxygen.

The capsule comprises, further, a cover element 8 fixed to the edge 7 of the casing 2 to close hermetically the capsule 1, i.e. the open cavity 5 and thus preserve the product P. The cover element 8 comprises an aluminium film or a plastic film provided with a barrier layer that is perforable by extracting means of the end product of the dispensing machine 60.

The cover element 8 is fixed to the edge 7 of the casing 2 by means of thermowelding, or ultrasound welding or gluing. Preferably, the cover element 8 is fixed to the casing by thermowelding, as will be seen below.

The base wall 3 of the capsule further has a preferably circular hole bounded by a further annular edge 3a extending as far as the side wall 4 of the capsule. A further cover element 25, that is similar to the cover element 8 and is perforable by cutting means and/or injection means for cutting and/or injecting the fluid F of the dispensing machine 60, is fixed to the further edge 3a outside the base wall 3, to close the hole thereof, in a similar manner to what has already been said for the cover element 8.

The cover element 8 and the further cover element 25 can be made of aluminium with a thickness comprised between 10 and 50 micron and a basic weight of < 200 gr/m².

The edge 7 of the capsule comprises a sealing element 9 that comprises at least one protrusion 10, which is also obtainable by thermoforming that faces the base wall 3 and defines at least one further cavity 11 that is open in an opposite direction to the base wall 3. The protrusion 10 and the further cavity 11 of the sealing element 9 give the edge 7 of the capsule 1 elasticity and deformability that enable a seal to be made between the capsule 1 and the dispensing machine 60 when the capsule 1 is introduced into the dispensing machine 60, as will be disclosed below.

In addition to the protrusion 10, the edge 7 also has a flat annular end 6.

As illustrated in figure 2, the dispensing machine 60, of known type and not disclosed in detail, comprises a seat or space 61 suitable for containing and receiving the capsule 1 and locking means 62 arranged for locking the capsule 1 firmly inside the aforesaid space 61 in an operating configuration.

The dispensing machine 60 further comprises cutting means 65 located on the bottom 66 of the space 61 and arranged for piercing the base wall 3 of the capsule, in particular the further cover element 25. Means for injecting the fluid F (not shown) is suitable for supplying the pressurised fluid F to the seat 61 of the dispensing machine 60. This fluid F is in turn injected inside the cavity 5 of the capsule through the openings made on the base 3 of the capsule by the cutting means 65.

Extracting means (not shown) is provided for drilling the cover element 8 so as to enable the end product to exit the capsule 1.

In one condition of use, the flange edge 7 of the capsule 1 is tightened and compressed between the locking means 62 and a portion 63 of a supporting frame 67 of the dispensing machine 60 in which the space 61 is obtained.

The locking means 62 comprises, for example, an annular plate that acts on the edge 7 of the casing 2.

Abutting means 64 is provided on the supporting portion 63 of the frame 67 and comprises one or more annular ridges that abut on the sealing element 9 of the capsule 1. As the sealing element 9 is elastically deformable, owing to the contact pressure generated by the locking means 62 in the operating configuration, the sealing element 9 deforms locally and substantially takes on the shape of the annular ridges of the abutting means 64.

In this manner, the sealing element 9 is able to engage in a sealing manner, when pressed, with abutting means 64 of the dispensing machine 60.

This deformation ensures an optimum seal of the edge 7 with the supporting portion 63 of the frame 67, which prevents the exit from the latter of fluid F or of pressurised end product during a dispensing operating step.

The protrusion 10 that is obtainable by thermoforming is arranged in a first circumferal annular zone 12 (Figure 4) of the edge 7. The protrusion 10 is also shaped as a beaker or cup and comprises a respective base wall 13, parallel to the base wall 3 of the capsule 1, a first side wall 14 and a second side wall 26 defining the further open cavity 11.

The first annular zone 12 is determined by the overall dimensions of the protrusion 10 in the edge 7 in a direction that is radial with respect to a longitudinal axis A of the capsule 1, that can coincide with the axis of symmetry of the capsule, and thus as the maximum radial extent of the opening of the further cavity 11.

The sealing element 9 can comprise a single continuous annular protrusion 10 arranged in the first annular zone 12 and in this case the further cavity 11 is annular, circumferal and continuous and is arranged externally to the cavity 5 in a radial direction with respect to the longitudinal axis A.

According to an alternative embodiment which is not shown, the sealing element 9 comprises a plurality of protrusions 10 arranged in separate portions of the first annular zone 12, that define a plurality of further cavities 11 that are separate and arranged circumferally in the first annular zone 12.

According to a different alternative embodiment (which is not shown), the plurality of protrusions 10 are arranged alternatively in separate portions of the first annular zone 12 and of a second circumferal annular zone (which is not shown) of the edge 7, arranged externally to the first annular zone 12 in a radial direction with respect to the longitudinal axis A.

The radial extent, i.e. measured in a radial direction, of the first annular zone 12 is selected in such a manner as to enable the capsule 1 to adapt to dispensing machines of different models, abutting on the abutting means 64 of the dispensing machine 60 however they are arranged radially in the dispensing machine 60. It should be observed that if optionally both the first annular zone 12 and the second annular zone are present because the protrusions 10 are arranged in distinct concentric annular zones, the measures of radial extent that will be subsequently supplied are to be deemed not to lose scope for a radial extent that includes the first annular zone 12 and the second annular zone.

As shown in Figure 4, the first annular zone 12 has a radial extent comprised in an interval from 1.0 mm to 4.0 mm, in particular preferably in an interval comprised between 1.50 mm and 2.50 mm, in particular preferably equal to 1.65 mm.

Between the first annular zone 12 and the side wall 4 of the capsule 1 an edge portion 15 is interposed having a length that is less than 4.00 mm, in particular preferably 0.75 mm.

It should be noted that in the capsule 1 shown in Figure 4 the length of the edge portion 15 is not nil because a substantially annular gap 16 is present that is interposed between the side wall 4 of the capsule and the second side wall 26 of the protrusion 10 that spaces the protrusion 10 from the side wall 4 of the capsule 1.

The cover element 8 is joined to the edge 7 of the capsule 1, in particular by thermowelding along a first annular joining portion 21 that extends along the edge portion 15. The cover element 8 does not extend above the further cavity 11, which is thus open. This fixing mode of the cover element 8 is particularly preferred when the sealing element 9 comprises a plurality of protrusions 10 arranged in separate portions of the first annular zone 12, or a plurality of protrusions 10 arranged alternatively in separate portions of the first annular zone 12 and of a second circumferal annular zone of the edge 7, arranged externally to the first annular zone 12 in a radial direction with respect to the longitudinal axis A.

According to a non claimed embodiment of the capsule shown in Figure 5, the annular gap 16 is absent and the distance between the protrusion 10 and side wall 4 of the capsule 1 is substantially nil because the side wall 4 of the capsule and the second side wall 26 of the protrusion 10 have a common origin and define together an acute angle of top 17.

The cover element 8 is joined to edge 7 of the capsule 1, in particular by thermowelding, along a single annular joining portion 27 that extends along the entire edge 7, extending thus also inside the cavity 11, which remains open.

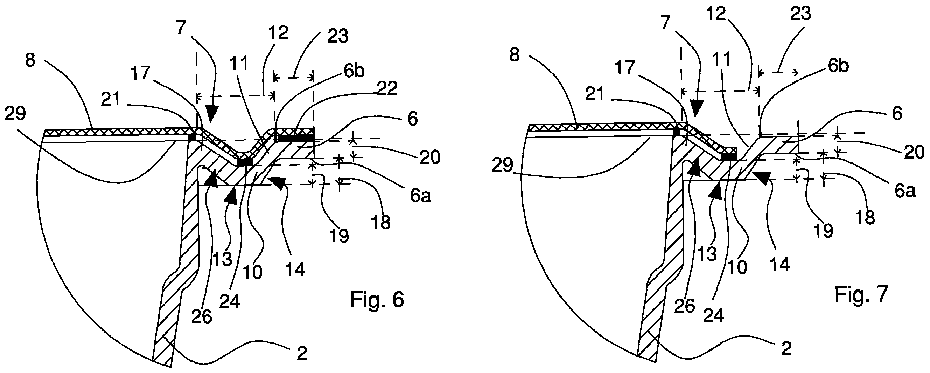

According to a further non claimed embodiment of the capsule, shown in Figure 6, the cover element 8 is joined to edge 7 of the capsule 1, in particular by thermowelding, at least along a first annular joining portion 21, that is internal in a direction that is radial with respect to the first annular zone 12, a second annular joining portion 22, that is external in a direction that is radial with respect to the first annular zone 12 on the flat annular end 6 of the edge 7, and a third annular joining portion 24 on the bottom of the cavity 11, respectively.

The first joining portion 21 has a radial extent comprised between 0.10 mm and 3.00 mm, preferably equal to 0.45 mm.

The second joining portion 22 has a radial extent of at least 0.3 mm and extends substantially along the entire flat annular end 6. Also in this embodiment, the cover element 8 extends inside the cavity 11, which remains open.

The third annular joining portion 24 has a radial extent of at least 0.1 mm.

According to another alternative embodiment of the capsule, shown in Figure 7, the cover element 8 is joined to edge 7 of the capsule 1, in particular by thermowelding, at least along a first annular joining portion 21 that is internal in a direction that is radial with respect to the first annular zone 12 and a third annular joining portion 24 on the bottom of the cavity 11, respectively.

The first joining portion 21 has a radial extent of at least 0.1 mm.

The third annular joining portion 24 has a radial extent of at least 0.1 mm.

In this embodiment, the cover element 8 extends only partially inside the cavity 11, in the zone comprised between the side wall 4 of the capsule and the bottom of the cavity 11, without extending on the flat annular end 6. Also in this embodiment the cavity 11 remains open.

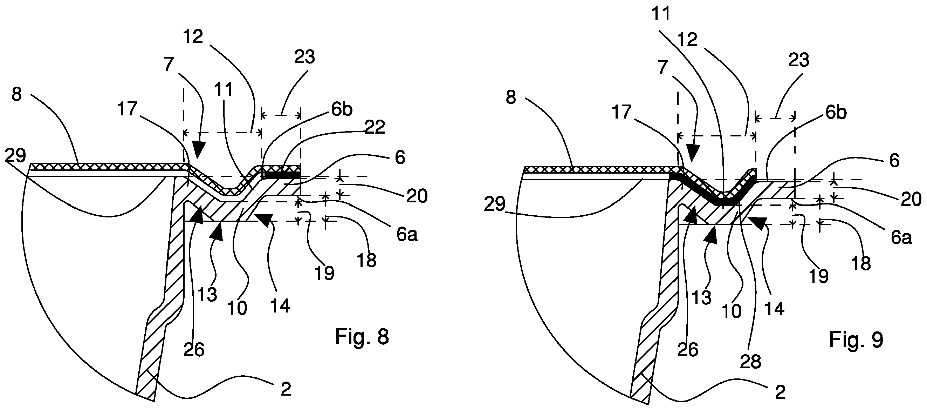

According to another non claimed embodiment of the capsule, shown in Figure 8, the cover element 8 is joined to edge 7 of the capsule 1, in particular by thermowelding, at least along a second annular joining portion 22 that is external in a direction that is radial with respect to the first annular zone 12. The second annular joining portion 22 has a radial extent of at least 0.1 mm and extends substantially along the entire flat annular end 6. Also in this embodiment, the cover element 8 extends inside the cavity 11, which remains open. According to a further alternative embodiment of the capsule, shown in Figure 9, the cover element 8 is joined to edge 7 of the capsule 1, in particular by thermowelding, along a further single annular joining portion 28 that extends along the edge 7 as far as the start of the flat annular end 6, thus also inside the cavity 11, which remains open, without however extending above the flat annular end 6.

The methods of joining the cover element 8 to the edge 7 of the capsule 1, illustrated in Figures 5 to 9, are also applicable to the embodiment of the capsule 1 illustrated in Figure 4.

Also the dimensions of the flat annular end 6 contribute to making the sealing element, as will be seen below. The flat annular end 6 has a radial extent 23 of at least 0.3 mm.

Considering on the other hand a measurement along an axis parallel to the longitudinal axis A, the protrusion 10 has a longitudinal extent 18 and i.e. a height, from a surface 6a of the flat annular end 6 facing the base wall 3 of the capsule 1 to the base wall 13 of the protrusion 10 comprised between 0.30 mm and 0.80 mm. If the base wall 13 of the protrusion 10 is parallel to the base wall 3 of the capsule 1, the longitudinal extent 18 is constant and preferably equal to 0.75 mm.

Nevertheless, the protrusion 10 can have a total longitudinal extent that is greater than the longitudinal extent 18, added to the thickness of the casing 2, if thermoforming is deeper in some portions of edge 7 than the flat annular end 6 thereof, as for example in Figures 5 to 8, in which the top 17 of the capsule is not aligned on a surface 6b of the flat annular end 6 of the edge 7, opposite the surface 6a.

If a thickness of the casing 2 in the edge 7 is now considered, it has been experimentally established that the deformation of the sealing element 9 is effective if in the protrusion 10 the casing 2 has a first thickness 19, corresponding to the thickness of the bottom of the cavity 11, i.e. of the base wall 13, comprised in a range from 0.15 mm to 0.90 mm, in particular preferably between 0.20 mm and 0.60 mm, still more preferably equal to 0.25 mm. The deformation of the sealing element 9 is further facilitated if the flat annular end 6 has a second thickness 20 comprised between 0.15 mm and 0.90 mm, in particular preferably between 0.20 mm to 0.60 mm, still more preferably equal to 0.25 mm, if the first side wall 14 and the second side wall 26 both have a thickness from 0.15 mm to 0.90 mm, in particular preferably between 0.20 mm and 0.60 mm, still more preferably equal to 0.25 mm. The first thickness 19 is suitably selected because it has to enable the sealing element 9 to flex and deform when it is compressed by the abutting means 64 of the dispensing machine 60 and has to ensure the sealing element 9 sufficient mechanical resistance. Tests conducted by the inventors have in fact shown that a first thickness 19 greater than 0.90 mm makes the sealing element 9 too stiff, preventing it from deforming sufficiently to ensure that it can engage in a sealing manner on the abutting means 64 of the dispensing machine 60, Further, the aforesaid tests have shown that if the first thickness 19 is less than 0.15 mm there is the risk that the sealing element 9 and the edge 7 of the capsule 1 may get damaged during welding of the cover element 8, or during conveying of the capsule 1, or during handling of the capsule 1 by a user. The inventors have also ascertained that also the thickness selected for the first side wall 14 and for the second side wall 26 can contribute advantageously, together with the first thickness 19, to sufficient flexibility and deformability of the sealing element 9, ensuring it at the same time sufficient mechanical resistance.

Advantageously, also the second thickness 20, the longitudinal extent 18 of the protrusion 10, the length of the edge portion 15, in the capsule embodiment illustrated in Figure 4, are chosen to facilitate flexure and deformation of the sealing element 9.

The joining portions 21, 22, 24, 27 and 28 joining the cover element 8 to the edge 7, which are mentioned above, above all when they are obtained by thermowelding, have blocking features in the sense that they ensure that the capsule preserves the initial product P over time in ideal conditions when stored during warehousing but at the same time they ensure that the sealing element 9 is maintained unaltered even when the latter flexes and is deformed by the abutting means 64 of the dispensing machine 60. In other words, the joining portions do not yield and maintain the cover element 8 whole and joined to the casing 2 even when subject to pressure, for example generated by the development of CO₂ inside the capsule 1. In fact, the fact that the first and the second annular joining portion 21 and 22 are arranged, with respect to the annular joining portion 24, on a different level with respect to the opening 29 of the cavity 5, i.e. are staggered with respect to the third annular joining portion 24 in a direction parallel to said axis A of the capsule, makes the cover element 8 resist better mechanical stresses that are due to a pressure increase inside the cavity 5 and does not detach from the edge 7 through the effect of said mechanical stress. Similarly, the fact that the annular joining portions 27 and 28 extend on different levels with respect to the opening 29 of the cavity 5, i.e. have mutually staggered portions in a direction parallel to said axis A of the capsule, makes the cover element 8 resist better mechanical stresses that are due to a pressure increase inside the cavity 5 and does not detach from the edge 7 through the effect of said mechanical stress. In other words, if the cover element 8 is joined to the edge 7 of the capsule 1 in zones of the edge 7 that are at different levels with respect to the opening 29 of the cavity 5, i.e. are mutually staggered in a direction that is parallel to said axis A of the capsule, a significant increase of resistance of the cover element 8 to said mechanical stress is obtained.

The capsule 1 of the invention thus ensures an optimum seal inside the dispensing machine, during the dispensing step without requiring the use of specific washers associated with the dispensing machine and/or with the capsule.

In this manner, optimum hygienic conditions in the dispensing procedure and moderate production costs for the capsule are ensured, as the capsule can be quickly and easily obtained by thermoforming a sheet of plastic material. Owing to the deformability of the edge 7 ensured by the protrusion 10 and by the further cavity 11 of the sealing element 9, the capsule can adapt to different embodiments of the abutting means 64 of the dispensing machines 60, without the need to make different shaped edges 7 for each type of model of dispensing machine.

The capsule 1 of the invention is thus able to adapt to different models of dispensing machine 60.

It should be added that the deformability of the sealing element 9 is ensured both by the type of selected sheet material, which is per se deformable, but above all by the thickness of the casing 2 in the edge 7 of the capsule 1, which is makeable by thermoforming, as detailed previously.

In particular the thickness 19 of the thermoformed casing 2 in the protrusion 10 ensures the deformability and the flexibility of the sealing element 9. Further, it has been observed in experiments that also selecting a suitable thickness 20 for the flat annular end 6 and the radial extent 23 thereof is important inasmuch as the flat annular end 6 contributes to making an effective seal.

The flat annular end 6 of the edge 7 is in fact able, when deformed, to follow the contour of the abutting means of the dispensing machine for all the radial extent 23 thereof, contributing to avoiding undesired losses of liquid.

## Claims

1. Capsule (1) for beverages comprising a casing (2) in turn comprising: a base wall (3) and a side wall (4) defining a cavity (5) suitable for containing an initial product (P) to be combined with a fluid (F) to obtain an end product, and also an edge (7) extending from said side wall (4); wherein said capsule further comprises a cover element (8) fixed to said edge (7) in particular by thermowelding in at least one zone of said edge (7) to close said cavity (5) hermetically, said cover element (8) being perforable by extracting means of a dispensing machine (60) in which said capsule is usable, said cover element (8) having dimensions so as to cover only partially said edge (7), said casing (2) being made by forming a sheet of thermoformable plastic material and said edge (7) comprising a sealing element (9) comprising at least one protrusion (10) facing said base wall (3) which is also obtainable by said forming and defines at least one further cavity (11) **characterised in that** said further cavity (11) is open in a direction opposite said base wall (3),

2. Capsule (1) according to claim 1, wherein said edge (7) has a flat annular end (6).

3. Capsule (1) according to claim 1, or 2, wherein said cover element (8) is joined to said edge (7) of said capsule (1), in particular by thermowelding, along a first annular joining portion (21) that is internal in a radial direction with respect to said first cavity (11) and along a further annular joining portion (24) located on the bottom of said cavity (11).

4. Capsule according to claim 2, wherein said cover element (8) is joined to said edge (7) of said capsule (1), in particular by thermowelding, along a further single annular joining portion (28) that extends along the edge (7) as far as the beginning of said flat annular end (6) of said edge (7), extending inside the cavity (11), but without extending above said flat annular end (6).

5. Capsule (1) according to any preceding claim, wherein a thickness (19) of a bottom of said cavity (11), consisting of a base wall (13) of said protrusion (10), is comprised between 0.15 mm and 0.90 mm, preferably between 0.20 mm and 0.60 mm, in particular preferably equal to 0.25 mm.

6. Capsule (1) according to any preceding claim, wherein said protrusion (10) is arranged in a first circumferal annular zone (12) of said edge (7).

7. Capsule (1) according to claim 6, wherein said sealing element (9) comprises a single continuous annular protrusion arranged in said first annular zone (12).

8. Capsule (1) according to claim 6, wherein said sealing element (9) comprises a plurality of protrusions arranged in separate portions of said first annular zone (12).

9. Capsule (1) according to claim 8, wherein the protrusions of said plurality of protrusions are arranged alternatingly in separate portions of said first annular zone (12) and of a second circumferal annular zone of said edge, arranged externally in a radial direction with respect to said first annular zone (12).

10. Capsule (1) according to any one of claims 6 to 9, wherein said first annular zone (12) has a radial extent comprised in an interval from 1.00 mm to 4.00 mm, in particular preferably in an interval comprised between 1.50 mm and 2.50 mm, in particular preferably equal to 1.65 mm.

11. Capsule (1) according to any one of claims 6 to 10, wherein said first annular zone (12) has a distance (15) from said side wall (4) that is less than 4.00 mm, in particular preferably 0.75 mm.

12. Capsule (1) according to any one of claims 2 to 11, wherein said protrusion (10) has a longitudinal extent (18) comprised between 0.30 mm and 0.80 mm, said longitudinal extent (18) being measured along an axis parallel to a longitudinal axis (A) of the capsule from a surface (6a) of said flat annular end (6) of said edge (7) facing said base wall (3) of said capsule to a base wall (13) of said protrusion (10); and wherein in particular said longitudinal extent (18) is constant and equal to 0.75 mm, if said base wall (13) of said protrusion (10) is parallel to said base wall (3) of said capsule (1).

13. Capsule (1) according to any one of claims 2 to 12, wherein said flat annular end (6), has a radial extent (23) of at least 3 mm.

14. Capsule according to any one of claims 2 to 13, wherein said flat annular end (6) of said edge (7) has a further thickness (20) comprised between 0.15 mm and 0.90 mm, in particular preferably comprised between 0.20 mm and 0.60 mm, in particular still more preferably equal to 0.25 mm.

15. Capsule (1) according to any preceding claim, wherein a first side wall (14) and a second side wall (26) of said protrusion (10) both have a thickness comprised between 0.15 mm and 0.90 mm, in particular preferably comprised between 0.20 mm and 0.60 mm, still more preferably equal to 0.25 mm.

16. Capsule (1) according to any preceding claim, wherein said sheet of thermoformable plastic material comprises at least a first layer of material, in particular suitable for contacting and/or preserving said initial product (P) and a second layer of material, made of material that is impermeable to gases, in particular to oxygen.

## Patentansprüche

1. Kapsel (1) für Getränke, mit einem Gehäuse (2), das wiederum aufweist: eine Grundwand (3) und eine Seitenwand (4), die einen Hohlraum (5) definieren, der zum Enthalten eines anfänglichen Produktes (P) geeignet ist, das mit einem Fluid (F) zu kombinieren ist, um ein Endprodukt zu erhalten, sowie einen Rand (7), der sich von der Seitenwand (4) erstreckt; wobei die Kapsel weiterhin ein Abdeckelement (8) aufweist, das an dem Rand (7) insbesondere durch Thermoschweißen in zumindest einem Bereich des Randes (7) festgelegt ist, um den Hohlraum (5) hermetisch zu verschließen, wobei das Abdeckelement (8) durch Extrahiermittel einer Ausgabemaschine (60), in der die Kapsel verwendbar ist, perforierbar ist, wobei das Abdeckelement (8) Abmessungen aufweist, so dass es den Rand (7) nur teilweise abdeckt,
wobei das Gehäuse (2) durch Formen einer Bahn aus thermoformbarem Kunststoffmaterial gefertigt ist, und der Rand (7) ein Dichtelement (9) aufweist, das zumindest einen der Grundwand (3) zugewandten Vorsprung (10) aufweist, der ebenfalls durch das genannte Formen erhaltbar ist und zumindest einen weiteren Hohlraum (11) definiert, **dadurch gekennzeichnet, dass** der weitere Hohlraum (11) in einer zur Grundwand (3) entgegengesetzten Richtung offen ist.

2. Kapsel (1) nach Anspruch 1, wobei der Rand (7) ein flaches ringförmiges Ende (6) aufweist.

3. Kapsel (1) nach Anspruch 1 oder 2, wobei das Abdeckelement (8) an den Rand (7) der Kapsel (1), insbesondere durch Thermoschweißen, entlang eines ersten ringförmigen Fügeabschnittes (21), der bezüglich des ersten Hohlraums (11) in einer radialen Richtung innenliegend ist, und entlang eines weiteren ringförmigen Fügeabschnitts (24) gefügt ist, der sich am Boden des Hohlraum (11) befindet.

4. Kapsel nach Anspruch 2, wobei das Abdeckelement (8) an den Rand (7) der Kapsel (1), insbesondere durch Thermoschweißen, entlang eines weiteren einzelnen ringförmigen Fügeabschnittes (28) gefügt ist, der sich entlang des Randes (7) bis zu dem Beginn des flachen ringförmigen Endes (6) des Randes (7) erstreckt, und der sich innerhalb des Holraums (11) erstreckt, jedoch ohne sich auf dem flachen ringförmigen Ende (6) zu erstrecken.

5. Kapsel (1) nach irgendeinem vorhergehenden Anspruch, wobei eine Dicke (19) eines Bodens des Hohlraums (11), der aus einer Grundwand (13) des Vorsprungs (10) besteht, zwischen 0,15 mm und 0,90 mm, vorzugsweise zwischen 0,20 mm und 0,60 mm inbegriffen ist, insbesondere vorzugsweise gleich 0,25 mm beträgt.

6. Kapsel (1) nach irgendeinem vorhergehenden Anspruch, wobei der Vorsprung (10) in einem ersten umfänglichen ringförmigen Bereich (12) des Randes (7) angeordnet ist.

7. Kapsel (1) nach Anspruch 6, wobei das Dichtelement (9) einen einzelnen durchgehenden ringförmigen Vorsprung aufweist, der in dem ersten ringförmigen Bereich (12) angeordnet ist.

8. Kapsel (1) nach Anspruch 6, wobei das Dichtelement (9) eine Mehrzahl an Vorsprüngen aufweist, die in separaten Abschnitten des ersten ringförmigen Bereichs (12) angeordnet sind.

9. Kapsel (1) nach Anspruch 8, wobei die Vorsprünge der Mehrzahl an Vorsprüngen alternierend in separaten Abschnitten des ersten ringförmigen Bereichs (12) und eines zweiten umfänglichen ringförmigen Bereichs des Randes angeordnet sind, der bezüglich des ersten ringförmigen Bereichs (12) in einer radialen Richtung außerhalb angeordnet ist.

10. Kapsel (1) nach irgendeinem der Ansprüche 6 bis 9, wobei der erste ringförmige Bereich (12) eine radiale Erstreckung aufweist, die in einem Intervall von 1,00 mm bis 4,00 mm, insbesondere vorzugsweise in einem Intervall zwischen 1,50 mm und 2,50 mm inbegriffen ist, insbesondere vorzugsweise gleich 1,65 mm beträgt.

11. Kapsel (1) nach irgendeinem der Ansprüche 6 bis 10, wobei der erste ringförmige Bereich (12) einen Abstand (15) von der Seitenwand (4) aufweist, der geringer ist als 4,00 mm, insbesondere vorzugsweise 0,75 mm beträgt.

12. Kapsel (1) nach irgendeinem der Ansprüche 2 bis 11, wobei der Vorsprung (10) eine Längserstreckung (18) aufweist, die zwischen 0,30 mm und 0,80 mm inbegriffen ist, wobei die Längserstreckung (18) entlang einer Achse parallel zu einer Längsachse (A) der Kapsel von einer Oberfläche (6a) des flachen ringförmigen Endes (6) des Randes (7), die der Grundwand (3) der Kapsel zugewandt ist, zu einer Grundwand (13) des Vorsprungs (10) gemessen ist; und wobei insbesondere die Längserstreckung (18) konstant ist und gleich 0,75 mm beträgt, wenn die Grundwand (13) des Vorsprungs (10) parallel zu der Grundwand (3) der Kapsel (1) ist.

13. Kapsel (1) nach irgendeinem der Ansprüche 2 bis 12, wobei das flache ringförmige Ende (6) eine radial Erstreckung (23) von zumindest 3 mm aufweist.

14. Kapsel nach irgendeinem der Ansprüche 2 bis 13, wobei das flache ringförmige Ende (6) des Randes (7) eine weitere Dicke (20) aufweist, die zwischen 0,15 mm und 0,90 mm inbegriffen ist, insbesondere vorzugsweise zwischen 0,20 mm und 0,60 mm inbegriffen ist, insbesondere noch bevorzugter gleich 0,25 mm beträgt.

15. Kapsel (1) nach irgendeinem vorhergehenden Anspruch, wobei eine erste Seitenwand (14) und eine zweite Seitenwand (26) des Vorsprungs (10) beide eine Dicke aufweisen, die zwischen 0,15 mm und 0,90 mm inbegriffen ist, insbesondere vorzugsweise zwischen 0,20 mm und 0,60 mm inbegriffen ist, noch bevorzugter gleich 0,25 mm beträgt.

16. Kapsel (1) nach irgendeinem vorhergehenden Anspruch, wobei die Bahn aus thermoformbarem Kunststoffmaterial zumindest eine erste Materiallage aufweist, die insbesondere zum In-Berührung-Kommen mit dem und/oder Aufbewahren des anfänglichen Produktes (P) geeignet ist, und eine zweite Materiallage, die aus einem Material gefertigt ist, das für Gase, insbesondere Sauerstoff, undurchlässig ist.

## Revendications

1. Capsule (1) pour boissons comprenant un boîtier (2) comprenant à son tour: une paroi de base (3) et une paroi latérale (4) définissant une cavité (5) adaptée pour contenir un produit initial (P) devant être combiné avec un fluide (F) pour obtenir un produit final, et également un bord (7) s'étendant à partir de ladite paroi latérale (4); dans laquelle ladite capsule comprend en outre un élément de couvercle (8) fixé audit bord (7) en particulier par thermosoudage dans au moins une zone dudit bord (7) pour fermer ladite cavité (5) hermétiquement, ledit élément de couvercle (8) perforable par des moyens d'extraction d'une machine de distribution (60) dans laquelle ladite capsule utilisable, ledit élément le couvercle (8) ayant des dimensions de manière à recouvrir uniquement partiellement ledit bord (7), ledit boîtier (2) étant fabriqué par mise en forme une feuille de matière plastique thermoformable et ledit bord (7) comprenant un élément d'étanchéité (9) comprenant au moins une saillie (10) faisant face à ladite paroi de base (3) qui est également obtenable par ladite mise en forme et définit au moins une cavité supplémentaire (11), **caractérisée en ce que** ladite cavité supplémentaire (11) est ouverte dans une direction opposée à ladite paroi de base (3).

2. Capsule (1) selon la revendication 1, dans laquelle ledit bord (7) a une extrémité annulaire plate (6).

3. Capsule (1) selon la revendication 1 ou 2, dans laquelle ledit élément de couvercle (8) est joint audit bord (7) de ladite capsule (1), en particulier par thermosoudage, le long d'une première partie de jonction annulaire (21) qui est interne dans une direction radiale par rapport à ladite première cavité (11) et le long d'une partie de jonction annulaire supplémentaire (24) située au fond de ladite cavité (11).

4. Capsule selon la revendication 2, dans laquelle ledit élément de couvercle (8) est joint audit bord (7) de ladite capsule, en particulier par thermosoudage, le long d'une partie de jonction annulaire unique supplémentaire (28) qui s'étend le long du bord (7) aussi loin que le début de ladite extrémité annulaire plate (6) dudit bord (7), en s'étendant à l'intérieur de la cavité (11), mais sans s'étendre au-dessus de ladite extrémité annulaire plate (6).

5. Capsule (1) selon l'une quelconque des revendications précédentes, dans laquelle une épaisseur (19) d'un fond de ladite cavité (11), constituée d'une paroi de base (13) de ladite saillie (10), est comprise entre 0,15 mm et 0,90 mm, de préférence entre 0,20 mm et 0,60 mm, en particulier de préférence égale à 0,25 mm.

6. Capsule (1) selon l'une quelconque des revendications précédentes, dans laquelle ladite saillie (10) est agencée dans une première zone annulaire circonférentielle (12) dudit bord (7).

7. Capsule (1) selon la revendication 6, dans laquelle ledit élément d'étanchéité (9) comprend une unique saillie annulaire continue agencée dans ladite première zone annulaire (12).

8. Capsule (1) selon la revendication 6, dans laquelle ledit élément d'étanchéité (9) comprend une pluralité de saillies agencées dans des parties séparées de ladite première zone annulaire (12).

9. Capsule (1) selon la revendication 8, dans laquelle les saillies de ladite pluralité de saillies sont agencées de manière alternée dans des parties séparées de ladite première zone annulaire (12) et d'une seconde zone annulaire circonférentielle dudit bord, agencée extérieurement dans une direction radiale par rapport à ladite première zone annulaire (12).

10. Capsule (1) selon l'une quelconque des revendications 6 à 9, dans laquelle ladite première zone annulaire (12) a une étendue radiale comprise dans un intervalle de 1,00 mm à 4,00 mm, en particulier de préférence dans un intervalle compris entre 1,50 mm et 2,50 mm, en particulier de préférence égale à 1,65 mm.

11. Capsule (1) selon l'une quelconque des revendications 6 à 10, dans laquelle ladite première zone annulaire (12) a une distance (15) par rapport à ladite paroi latérale (4) qui est inférieure à 4,00 mm, en particulier de préférence de 0,75 mm.

12. Capsule (1) selon l'une quelconque des revendications 2 à 11, dans laquelle ladite saillie (10) a une étendue longitudinale (18) comprise entre 0,30 mm et 0,80 mm, ladite étendue longitudinale (18) étant mesurée le long d'un axe parallèle à un axe longitudinal (A) de la capsule à partir d'une surface (6a) de ladite extrémité annulaire plate (6) dudit bord (7) faisant face à ladite paroi de base (3) de ladite capsule jusqu'à une paroi de base (13) de ladite saillie (10); et dans laquelle en particulier ladite étendue longitudinale (18) est constante et égale à 0,75 mm, si ladite paroi de base (13) de ladite saillie (10) est parallèle à ladite paroi de base (3) de ladite capsule (1).

13. Capsule (1) selon l'une quelconque des revendications 2 à 12, dans laquelle ladite extrémité annulaire plate (6) a une étendue radiale (23) d'au moins 3 mm.

14. Capsule selon l'une quelconque des revendications 2 à 13, dans laquelle ladite extrémité annulaire plate (6) dudit bord (7) a une épaisseur supplémentaire (20) comprise entre 0,15 mm et 0,90 mm, en particulier de préférence comprise entre 0,20 mm et 0,60 mm, en particulier encore de manière plus préférée égale à 0,25 mm.

15. Capsule (1) selon l'une quelconque des revendications précédentes, dans laquelle une première paroi latérale (14) et une seconde paroi latérale (26) de ladite saillie (10) ont toutes deux une épaisseur comprise entre 0,15 mm et 0,90 mm, en particulier de préférence comprise entre 0,20 mm et 0,60 mm de manière encore plus préférée égale à 0,25 mm.

16. Capsule (1) selon l'une quelconque des revendications précédentes, dans laquelle ladite feuille de matière plastique thermoformable comprend au moins une première couche de matière, en particulier adaptée pour venir en contact avec ledit produit initial (P) et/ou pour préserver celui-ci, et une seconde couche de matière, faite d'un matériau qui est imperméable aux gaz, en particulier à l'oxygène.
